# EUROPÄISCHE PATENTSCHRIFT

(11) **EP 1 353 259 B1**
(45) Veröffentlichungstag und Bekanntmachung des Hinweises auf die Patenterteilung: **14.06.2006**
(21) Anmeldenummer: 02007846.5
(22) Anmeldetag: 08.04.2002
(51) Int. Cl.: G06F 1/00

(54) **Verfahren zur Aktualisierung und Lizenzierung von Computerprogrammen und Computer-System hierfür**
Method of upgrading and licensing computer programs and computer system therefor
Procédé de mise à jour et de gestion de licences pour logiciels et système d'ordinateur correspondant

(43) Veröffentlichungstag der Anmeldung: 15.10.2003
(73) Patentinhaber: Aladdin Knowledge Systems (Deutschland) GmbH, 82110 Germering (DE)
(72) Erfinder: Zunke, Michael, 85609 Aschheim (DE)
(74) Vertreter: Geyer, Fehners & Partner

(56) Entgegenhaltungen:
- WO-A-01/79970
- WO-A-98/58306
- US-A- 5 553 143
- US-A- 5 742 757

## Beschreibung

Die Erfindung bezieht sich auf ein Verfahren zum Betreiben eines Computer-Systems und auf ein Computersystem.

Die WO-A-98/58306 beschreibt ein Verfahren zum Betreiben eines Computer-Systems mit den Schritten:
- Installieren eines Programms auf dem Computer-System,
- Abspeichern von Moduldaten für das Programm im Computersystem, wobei ein Lizenzteil abgespeichert ist, und die abgespeicherten Moduldaten bevorzugt einen Informationsteil enthalten.

Die WO-A-01/79970 beschreibt ein Verfahren zum Betreiben eines Computer-Systems mit den Schritten:
- Installieren von Softwareeinheiten auf dem Computer System,
- Bereitstellen von Moduldaten für die Softwareeinheiten im Computersystem, wobei die Moduldaten für die Softwareeinheitein, die damit verbundenen notwendigen Lizenzen und bevorzugt noch einen Informationsteil enthalten.

Die US-A-5 553 143 beschreibt ein Verfahren zum Betreiben eines Computer-Systems mit den Schritten:
- Installieren eines Programms auf dem Computer-System,
- Abspeichern von Moduldaten für das Programm im Computersystem, wobei die abgespeicherten Moduldaten einen Lizenzteil und bevorzugt noch einen Informationsteil enthalten,
- Auswerten der abgespeicherten Moduldaten für den Erwerb einer weiteren Nutzungsberichtigung für das Programm, und
- Bereitstellen von Informationen für den Nutzungsberechtigungserwerb in Abhängigkeit des Auswerteergebnisses.

Bei einem bekannten Verfahren zum Betreiben eines Computer-Systems, auf dem ein lauffähiges Hauptmodul eines Programms installiert ist, ist es nicht möglich, eine separate Nutzungsberechtigung für ein in Verbindung mit dem Hauptmodul nutzbares Zusatzmodul des Programms zu enangen. Man muß sich an den Programmhersteller wenden, um eine komplett neue Nutzungsberechtigung zu erwerben, die nun auch für das Zusatzmodul gilt.

Ausgehend hiervon ist es Aufgabe der Erfindung, ein Verfahren zum Betreiben eines Computer-Systems und ein Computersystem bereitzustellen, mit denen ein Erwerb einer Nutzungsberechtigung für ein Zusatzmodul eines Programms vereinfacht werden kann.

Erfindungsgemäß wird die Aufgabe durch ein Verfahren gemäß Anspruch 1 gelöst.

Durch das erfindungsgemäße Verfahren wird der Zustand des Computer-Systems bzw. die Nutzungsberechtigungslage bei der Bereitstellung der Informationen berücksichtigt, so daß beim Nutzungsberechtigungserwerb die aktuelle Nutzungsberechtigungslage berücksichtigtwerden kann. Dadurch ist es für die Stelle, die die Nutzungsberechtigung vergibt, leichter möglich, kundenspezifische Angebote zu erstellen.

Auch können solche Informationen, wie z.B. technische Angaben über das Computer-System und seinen aktuellen Zustand (eingesetzter Prozessor, Betriebssystem, schon erworbene Nutzungsberechtigungen,...), bereitgestellt werden, mit denen es einer Lizenzierungsstelle, die vom Programmhersteller betrieben wird oder von ihm autorisiert ist, möglich ist, Nutzungsberechtigungen zu erteilen. Mit dem erfindungsgemäßen Verfahren kann der Erwerb der Nutzungsberechtigung sehr variabel gestaltet werden.

Ein weiterer Vorteil des erfindungsgemäßen Verfahrens besteht darin, daß für jedes Zusatzmodul eine individuelle Nutzungsberechtigung vergeben bzw. erworben werden kann, die mit der Nutzungsberechtigung eines anderen Zusatzmoduls bzw. des Hauptmoduls übereinstimmen oder sich von dieser Nutzungsberechtigung auch teilweise oder vollständig unterscheiden kann (insbesondere hinsichtlich der Art der Nutzungsberechtigung).

Als Hauptmodul des Programms wird hier ein Modul verstanden, das ohne die Zusatzmodule ausführbar ist. Ein Zusatzmodul ist ein Modul, das bevorzugt in Verbindung mit dem Hauptmodul ausgeführt wird. Das Zusatzmodul kann auch ein Modul sein, das nur in Verbindung mit dem Hauptmodul ausführbar ist oder das nur ausführbar ist, wenn das Hauptmodul installiert ist. Die Moduldaten für das Haupt- bzw. Zusatzmodul enthalten einen Lizenzteil, der zur Feststellung des Vorliegens der Nutzungsberechtigung benötigt wird. Es können auch noch weitere, von der Nutzungsberechtigung unabhängige Informationen enthalten sein. Alternativ können die Moduldaten für das Hauptmodul auch nur von der Nutzungsberechtigung unabhängige Daten enthalten, wenn die Moduldaten für das Zusatzmodul einen Lizenzteil aufweisen, oder die Information enthalten, daß keine speziellen Lizenzdaten für das Hauptmodul abgespeichert sind.

Im Auswerteschritt können z. B. der Lizenzteil und/oder der Informationsteil der Moduldaten für das Zusatzmodul, die Moduldaten für das Hauptmodul oder auch die Moduldaten für Haupt- und Zusatzmodul zusammen ausgewertet werden.

Im Infoteil kann beispielsweise die Versionsnummer des entsprechenden Moduls enthalten sein. Diese Versionsnummer kann beim Nutzungsberechtigungserwerb berücksichtigt werden. So kann z.B. ein Upgrade des entsprechenden Moduls oder auch eines anderen Moduls angeboten werden, wobei im Fall der Durchführung des Upgrades nur die Daten oder Dateien übertragen werden, die für diesen speziellen Upgrade benötigt werden. Dadurch kann das zu übertragende Datenvolumen minimiert werden, was insbesondere bei der Übertragung über Netzwerke (z.B. Internet) zu kürzeren Übertragungszeiten führt im Vergleich zu einem Upgrade, bei dem die unterschiedlichsten Ausgangskonfigurationen des Programms auf dem Computer-System berücksichtigt werden müssen, wie das bisher der Fall war.

Besonders vorteilhaft ist es, wenn ein Lizenzmanager neben der Verwaltung der Lizenzdaten (des Lizenzteils) auch noch den Informationsteil verwaltet, wobei insbesondere auch Informationsteile für Zusatzmodule verwaltet werden können, für die noch keine Lizenz vorliegt. Damit können mittels des Lizenzmanagers bzw. aufgrund der durch ihn verwalteten Daten individuelle Angebote beim Lizenzerwerb erstellt werden.

Insbesondere kann der Auswerteschritt und/oder der Bereitstellungsschritt mittelbar oder unmittelbar durch den Lizenzmanager durchgeführt werden. Der Lizenzmanager kann Teil des Programms oder auch ein separates Programm sein. Ferner kann der Lizenzmanager nicht nur für die Lizenzüberprüfung des Programms, sondern auch für die Lizenzüberprüfung von weiteren Programmen eingesetzt werden.

Das Abspeichem der Moduldaten für das Haupt- und/oder das Zusatzmodul kann während oder nach der Installation des Hauptmoduls erfolgen. Insbesondere können die Moduldaten für das Haupt- und das Zusatzmodul zu unterschiedlichen Zeiten abgespeichert werden. So können beispielsweise die Moduldaten für das Hauptmodul während der Installation und die Moduldaten für das Zusatzmodul nach einem Erwerb einer Nutzungsberechtigung abgespeichert werden. Auch ist es möglich, daß Moduldaten für noch nicht lizenzierte Zusatzmodule (für die beispielsweise noch keine Lizenz vorliegt) abgespeichert werden, wobei diese Zusatzmodule auf dem Computersystem vorhanden oder nicht vorhanden sein können. Die Moduldaten für die noch nicht lizenzierten Zusatzmodule können im Auswerteschritt berücksichtigt werden.

Insbesondere können beim erfindungsgemäßen Verfahren Informationen bereit gestellt werden, die eine Adresse einer Lizenzierungsstelle enthalten bei der eine bzw. die weitere Nutzungsberechtigung für das Zusatzmodul erworben werden kann. Somit kann die Adresse dynamisch an die aktuelle Nutzungsberechtigungslage angepaßt bzw. festgelegt werden, wodurch der Anwender gezielt mit der entsprechenden Lizenzierungsstelle verbunden werden kann.

Unter einer Adresse einer Lizenzierungsstelle wird hier jede Information verstanden, die eine Kontaktaufnahme mit der Lizenzierungsstelle ermöglicht. So kann die Adresse eine Postanschrift, eine Telefon-, eine Telefaxnummer eine Email-Adresse und insbesondere auch eine Internetadresse oder eine sonstige Adresse eines Computernetzwerks z. B. eines öffentlich zugänglichen oder eines firmeninternen Netzwerks oder Netzwerkbereichs sein.

Als Lizenzierungsstelle wird dabei jede unter der Adresse erreichbare Gegenstelle verstanden. Bei einem firmeninternen Netzwerk bzw. Netzwerkbereich kann die Lizenzierungsstelle ein spezieller Rechner sein, der einen von der Firma erworbenen Lizenzpool verwaltet und die Lizenzen (Nutzungsberechtigungen) firmenintern vergibt. Bei einer Internetadresse ist die entsprechende Lizenzierungsstelle die durch die Adresse eindeutig bestimmte Internetseite.

Damit kann erreicht werden, daß beim Erwerb der weiteren Nutzungsberechtigung derselbe Händler kontaktiert wird, bei dem schon eine Nutzungsberechtigung für das Haupt- oder Zusatzmodul erworben wurde. Durch dieses wiederkehrende Geschäft wird somit eine Händlerbindung erzeugt.

Ferner können bei erfindungsgemäßen Verfahren die Moduldaten im Auswerte-Schritt hinsichtlich der Nutzungsberechtigung, insbesondere der Art der Nutzungsberechtigung, des Zusatzmoduls und/oder des Hauptmoduls ausgewertet werden. Damit kann beispielsweise die gleiche Nutzungsberechtigungsart beim Erwerb der weiteren Nutzungsberechtigung (bzw. Lizenz) als erstes angeboten werden, so daß für den Anwender ein schneller Lizenzerwerb möglich ist. Auch ist es möglich, die gleiche Lizenzdauer für das Zusatzmodul anzubieten, die für das Hauptmodul vorliegt (z. B. zeitlich begrenzte oder zeitlich unbegrenzte Nutzungsdauer). Mögliche Nutzungsberechtigungsarten sind zeitlich unbegrenzte Nutzung, zeitlich begrenzte Nutzungen, käuflich zu erwerbend oder kostenlos bereitgestellte Nutzungsberechtigungen, Nutzungsberechtigungen, die nun eine vorbestimmte Anzahl von Programmaufrufen, von mit dem Programm durchführbaren Projekten, von Ausdrucken oder von sonstigen programmbedingten Aktionen zulassen.

Eine besonders bevorzugte Ausgestaltung des erfindungsgemäßen Verfahrens besteht darin, daß im Bereitstellungsschnitt Informationen bereitgestellt werden, die Angaben über die vorhandene Nutzungsberechtigungslage des Hauptmoduls und/oder des bzw. der Zusatzmodule enthalten. Anhand dieser Angaben, die bevorzugt zur Lizenzierungsstelle übertragen werden können, ist eine weitere Individualisierung des Angebots beim Erwerb der weiteren Nutzungsberechtigung leicht möglich. Da die Informationen aufgrund der im Computersystem abgespeicherten Moduldaten bereitgestellt werden, muß die Lizenzierungsstelle keine Daten über schon erworbene Nutzungsberechtigungen abspeichem und kann dennoch ein auf die aktuelle Nutzungsberechtigungslage zugeschnittenes Angebot erstellen.

Ferner können beim erfindungsgemäßen Verfahren die Moduldaten mittelbar oder unmittelbar durch das Hauptmodul oder ein separates Lizenzmodul, das vom Hauptmodul aufrufbar ist, verwaltet werden. Dadurch sind die relevanten Moduldaten beim Anwender (bzw. im Computer-System) vorhanden und können in einfacher Art ständig aktualisiert werden, so daß immer die aktuelle Nutzungsberechtigungslage bzw. der aktuelle Zustand des Systems erfaßt werden kann.

Eine besondere Weiterbildung des erfindungsgemäßen Verfahrens besteht darin, daß das Bereitstellen der Information die Erzeugung und Ausgabe (bevorzugt auf einem Bildschirm oder einer anderen Ausgabeeinheit des Computer-Systems) eines Menüs mit auswählbaren Menüpunkten umfaßt, wobei die Menüpunkte in Abhängigkeit des Auswerteergebnisses bestimmt werden. Dadurch ist es beispielsweise möglich, als ersten Menüpunkt den Erwerb einer Nutzungsberechtigungsart vorzugeben, die der Art der schon erworbenen Nutzungsberechtigung entspricht. Der erste Menüpunkt ist dabei z.B. der Menüpunkt, der am größten ist, der vorausgewählt ist bzw. der als erstes dem Anwender auffällt.

Des weiteren kann bei einer bevorzugten Weiterbildung des erfindungsgemäßen Verfahren bei Aufruf eines Zusatzmoduls anhand der abgelegten Moduldaten überprüft werden, ob eine Nutzungsberechtigung für das aufgerufene Zusatzmodul vorliegt, wobei bei Vorliegen der Nutzungsberechtigung das aufgerufene Zusatzmodul ausgeführt wird und bei Nichtvorliegen der Nutzungsberechtigung der Auswerte-Schritt und der Bereitstellungs-Schritt durchgeführt werden. Damit kann in einfacher Art während der Programmausführung der Erwerb von Nutzungsberechtigungen für Zusatzmodule durchgeführt werden.

Auch läßt sich bei schon vorhandenen Programmen, die bei Aufruf eines Zusatzmoduls eine Überprüfung der Nutzungsberechtigung durchführen, leicht eine Erweiterung zum erfindungsgemäßen Verfahren dadurch erreichen, daß man die schon vorhandene Überprüfung entsprechend erweitert. Da zur Durchführung der Überprüfung häufig eine separate Datei aufgerufen wird, läßt sich durch Austausch dieser Datei die Erweiterung leicht erreichen. Falls ein Lizenzmanager vom Programm zur Überprüfung der Nutzungsberechtigung aufgerufen wird, kann der Lizenzmanager entsprechend geändert bzw. erweitert werden.

Ferner können beim erfindungsgemäßen Verfahren nach dem Erwerb der weiteren Nutzungsberechtigungen Moduldaten, die den Nutzungsberechtigungserwerb und/oder das Zusatzmodul betreffen, für das die weitere Nutzungsberechtigung erworben wurde, im Computer-System abgespeichert werden. Damit wird eine Aktualisierung hinsichtlich der Nutzungsberechtigungslage der Zusatzmodule ermöglicht.

Insbesondere ist es beim erfindungsgemäßen Verfahren möglich, anhand der bereitgestellten Informationen automatisch eine Verbindung zu einer Lizenzierungsstelle herzustellen, bei der die Nutzungsberechtigung erworben werden kann. Dies führt zu einer weiteren Vereinfachung beim Erwerb der Nutzungsberechtigung. Unter automatischer Herstellung der Verbindung wird beispielsweise verstanden, daß das System selbst eine Datenverbindung erzeugt oder daß der Anwender eine Verbindung mit dem Internet oder einem andern Netzwerk herstellt und daß dann das System die entsprechende Adresse automatisch aufruft.

Ferner kann die Lizenzierungsstelle Moduldaten (insbesondere für das Zusatzmodul, für das eine Nutzungsberechtigung erworben wurde) erzeugen und deren Übertragung zum Computer-System bewirken. Dadurch kann die Lizerwerungsstelle gleich die erworbene Notzungsberechtigung beim Erzeugen der Moduldaten berücksichtigen, so daß die Aktualisierung der im Computer-System abgespeicherten Moduldaten gewährleistet ist.

Auch ist es möglich, daß die Lizenzierungsstelle eine Übertragung des Zusatzmoduls, für die eine Nutzungsberechtigung erworben ist, oder von Komponenten oder Ergänzungen des Zusatzmoduls zum Computer-System bewirkt. Dadurch läßt sich ein Online-Erwerb eines Zusatzmoduls einschließlich der entsprechenden Nutzungsberechtigung leicht realisieren.

Bei einer bevorzugten Ausgestaltung des erfindungsgemäßen Verfahrens werden zum Erwerb einer weiteren Nutzungsberechtigung für das Hauptmodul die abgelegten Moduldaten ausgewertet und in Abhängigkeit des Auswerteergebnisses Informationen zum Nutzungsberechtigungserwerb bereitgestellt. Somit kann auch beim Erwerb einer weiteren Nutzungsberechtigung für das Hauptmodul die aktuelle Nutzungsberechtigungs-lage berücksichtigt werden, um beispielsweise speziell angepaßte Angebote für den Nutzungsberechtigungserwerb erstellen zu können.

Insbesondere ist es möglich, daß nach dem Erwerb der weiteren Nutzungsberechtigung für das Hauptmodul Moduldaten über den Nutzungsberechtigungserwerb im Computer-System abgespeichert werden. Somit ist im Computer-System die aktuelle Nutzungs-berechtigungslage abgelegt und kann für einen zukünftigen Erwerb einer anderen Nutzungs-berechtigung für das Hauptmodul und/oder eines Zusatzmoduls genutzt werden.

Die Aufgabe wird auch durch ein Computer-System gemäβ Anspruch 13 gelöst.

Mit dem erfindungsgemäßen Computer-System werden somit Informationen für den Nutzungsberechtigungserwerb in Abhängigkeit des Auswerteergebnisses und somit in Abhängigkeit des Zustands des Computer-Systems ermittelt und bereitgestellt, so daß bei Erwerb der gewünschten Nutzungsberechtigung ein individuell angepaßtes Angebot leicht erstellt werden kann. Auch können aufgrund der Moduldatensammlung, in der die entsprechenden Moduldaten abgelegt sind, für verschiedene Zusatzmodule unterschiedliche Nutzungsberechtigungen erworben werden.

Bevorzugt ist das erfindungsgemäße Computer-System so ausgebildet, daß die oben beschriebenen Verfahrensschritte des Verfahrens zum Betreiben eines Computer-Systems ausführbar sind.

Die Erfindung wird nachfolgend unter Bezugnahme auf die Zeichnungen beispielhalber noch näher erläutert. Es zeigen:
- Fig. 1: eine schematische Ansicht des erfindungsgemäßen Computer-Systems;
- Fig. 2: eine schematische Ansicht einer auf dem Computer-System installierten Anwendung;
- Fig. 3: eine schematische Ansicht der Moduldatensammlung;
- Fig. 4: eine schematische Ansicht der Moduldatensammlung und
- Fig. 5: eine schematische Ansicht der Moduldatensammlung.

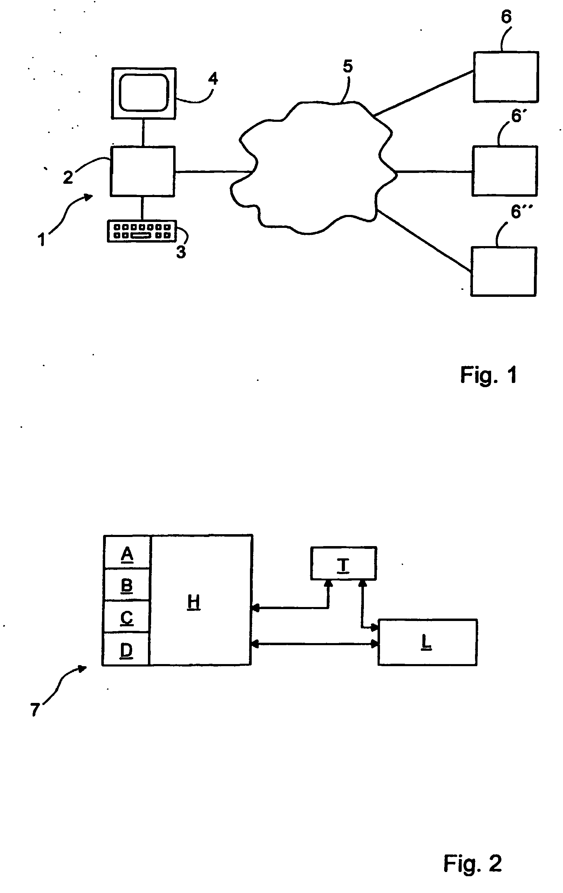

In Fig. 1 ist schematisch ein erfindungsgemäßes Computer-Systems 1 gezeigt, auf dem ein lauffähiges Hauptmodul eines Programms installiert ist, das zumindest noch ein Zusatzmodul enthält, das in Verbindung mit dem Hauptmodul ausführbar ist. Das Computer-System 1 umfaßt hier einen Rechenabschnitt 2 (mit z.B. Prozessor, Festplatte, weiteren Hardware-Elementen sowie einem Betriebssystem), eine Eingabeeinheit 3 (hier beispielsweise eine Tastatur) sowie eine Ausgabeeinheit 4 (z. B. Bildschirm). Das Computer-System 1 ist weiterhin so ausgebildet, daß es über eine Internetverbindung 5 mit Lizenzierungsstellen 6, 6', 6" verbindbar ist.

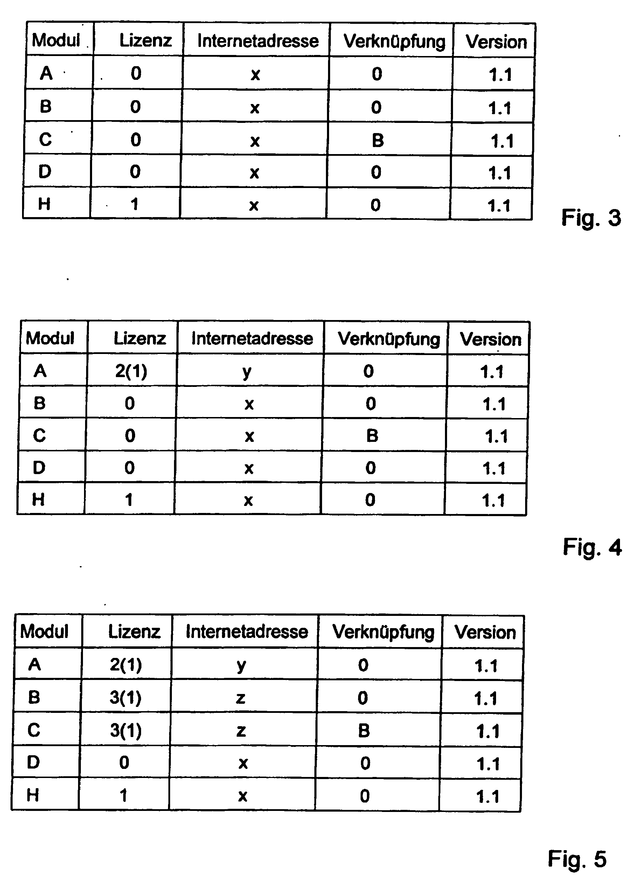

In Fig. 2 ist schematisch das auf dem Computer-System 1 installierte Programm 7 und das Zusammenwirken seiner Komponenten gezeigt, wobei das Programm 7 das installierte Hauptmodul H, vier Zusatzmodule A, B, C, D, einen Lizenzmanager L sowie eine Moduldatensammlung T enthält. Das Hauptmodul H und der Lizenzmanager L sind in lauffähiger Art installiert. Für die Zusatzmodule A-D, die in Verbindung mit dem Hauptmodul ausführbar sind, liegt hingegen im hier beschriebenen Beispiel noch keine Laufberechtigung vor. Diese Nutzungsberechtigungslage ist in der Moduldatensammlung T abgelegt, die beispielsweise als Tabelle organisiert sein kann, wie dies in Fig. 3 schematisch dargestellt ist.

Das Programm 7 (bzw. die Anwendung 7) kann beispielsweise ein Konstruktionssoftware für Architekten sein, wobei mit dem Hauptmodul H eine Konstruktion von Gebäuden möglich ist, mit dem Zusatzmodul A spezielle statische Berechnungen durchführbar sind, mit dem Zusatzmodul B perspektivische Darstellungen erzeugt werden können, die mittels des Zusatzmoduls C auf einem Drucker ausgedruckt werden können, und das Zusatzmodul D für die Erstellung von Schaltplänen für elektrische Installationen dient.

Zu jedem Modul A-D und H sind in der Moduldatensammlung T (Fig. 3) Moduldaten abgelegt, die einen Lizenzteil und einen Informationsteil enthalten. Der Lizenzteil umfaßt die vorliegende Lizenz (bzw. Laufberechtigung), die zur Feststellung des Vorliegens der Laufberechtigung benötigt wird, und der Informationsteil enthält weitere modulbezogene Aufgaben, wie z.B. eine Internetadresse, eine Verknüpfung sowie eine Versionsnummer des Moduls A-D, H.

Dabei bedeutet der Eintrag "0" in der Lizenzspalte, daß keine Nutzungsberechtigung für das entsprechende Modul vorliegt, der Eintrag "1" steht für eine unbeschränkte Nutzungsberechtigung. Ein Eintrag "2(1)" steht für eine kostenpflichtige und zeitlich beschränkte Nutzung, wobei die in Klammer angegebene Zahl die Nutzungsdauer in Monaten angibt, und ein Eintrag 3(1)" steht für eine kostenlose Nutzung, wobei wiederum die in Klammer angegebene Zahl die Nutzungsdauer in Monaten anzeigt. Neben den hier beispielhaft beschriebenen Lizenzarten sind noch weitere Lizenzarten möglich, wie z.B. eine Lizenz, die eine Zeitdauer der tatsächliche Benutzung des entsprechenden Moduls beschränkt.

In der Spalte Internetadresse ist eine Internetadresse "x" angegeben, mit der man, wie im folgenden noch beschrieben wird, zum Erwerb einer Nutzungsberechtigung für das entsprechende Modul A-D verbunden werden kann.

Aus der Spalte "Verknüpfen" ist entnehmbar, ob das entsprechende Modul A-D nur zusammen mit einem anderen Modul ausführbar ist. Wenn dies der Fall ist, ist die Bezeichnung des entsprechenden Moduls eingetragen, und wenn das nicht der Fall ist, ist "0" eingetragen.

In der Spalte Version ist eine Versionsnummer des entsprechenden Moduls A-D, H angegeben,
wobei hier für alle Module eine Versionsnummer 1.1 eingetragen ist. Die Versionsnummer kann beispielsweise so aufgebaut sein, daß aus ihr entnehmbar ist, für welchen Computer bzw. welche Zielplattform (insbesondere welches Betriebssystem) das entsprechende Modul entwickelt und einsetzbar ist.

Somit kann der in Fig. 3 gezeigten Moduldatensammlung T entnommen werden, daß lediglich für das Hauptmodul H eine zeitlich unbeschränkte Nutzungsberechtigung vorliegt, daß für die Zusatzmodule A-D keine Lizenz vorliegt, so daß die Zusatzmodule A-D nicht ausgeführt und genutzt werden können, und daß das Zusatzmodul C nur zusammen mit dem Zusatzmodul B ausführbar ist.

Wenn nun während der Ausführung der Anwendung 7 das Zusatzmodul A aufgerufen wird, überprüft das Hauptmodul H zusammen mit dem Lizenzmanager L (oder beispielsweise das aufgerufene Zusatzmodul A zusammen mit dem Lizenzmanager L) anhand der Moduldatensammlung T, ob die entsprechende Laufberechtigung vorliegt. In dem hier beschriebenen Fall ist in der Spalte "Lizenz" für das Modul A eine "0" eingetragen, so daß keine Nutzungsberechtigung vorliegt. Das Hauptmodul H (bzw. das Zusatzmodul A)und der Lizenzmanager L, die auf dem Computer-System installiert sind, bilden somit eine Auswerteeinheit zum Auswerten der Moduldaten.

Daraufhin wird eine Mitteilung über den Bildschirm 4 ausgegeben, daß keine Lizenz für dies Modul A vorliegt, daß diese aber erworben werden kann. Dazu können beispielsweise für den Anwender die Auswahlmöglichkeiten "Lizenzerwerb" und zurück zum Hauptmodul" vorgesehen werden. Die Anzeige der Auswahlmöglichkeiten kann beispielsweise in Abhängigkeit von Angaben des Informationsteils der Moduldaten erzeugt werden. So können beispielsweise in einer weiteren Spalte (nicht gezeigt) dazu entsprechende Informationen abgelegt sein.

Wenn sich der Anwender für die Auswahlmöglichkeit Lizenzerwerb entscheidet, wird durch das Hauptmodul H (bzw. Zusatzmodul A) und/oder den Lizenzmanager L aus der entsprechenden Zeile für das Zusatzmodul A in der Moduldatensammlung T die Internetadresse x ausgelesen und bereitgestellt. Dadurch bilden Hauptmodul (bzw. Zusatzmodul A) und/oder Lizenzmanager eine Bereitstellungseinheit, die als Information die Internetadresse bereitstellt. Diese Information wird gleich derart genutzt, daß automatisch eine Verbindung zur Internetadresse x hergestellt wird.

Unter der Internetadresse x ist eine Lizenzierungsstelle 6 erreichbar, bei der eine Laufberechtigung für das Zusatzmodul A erworben werden kann. Der Anwender wird somit automatisch zur richtigen Lizenzierungsstelle geführt bzw. mit dieser verbunden.

Wenn neben der Internetadresse z.B. noch die Versionsnummer bereitgestellt wird, kann dies über die automatisch hergestellte Verbindung zur Lizenzierungsstelle übertragen werden. Somit kann die Lizenzierungsstelle 6 anhand der übertragenen Versionsnummer beispielsweise feststellen, ob es ein Ergänzungsmodul zur Behebung von bekannt gewordenen Fehlern im Zusatzmodul A gibt oder ob es neuere Versionen des Zusatzmoduls A gibt.

Es wird angenommen, daß der Anwender eine kostenpflichtige, zeitlich begrenzte Nutzungsberechtigung für einen Monat erwirbt.

Die erworbene Nutzungsberechtigung bzw. die diese wiederspiegelnden Moduldaten und gegebenenfalls das Ergänzungsmodul werden über die Internetverbindung 5 zum Computer 1 übertragen und das Hauptmodul H (bzw. Zusatzmodul A) und/oder der Lizenzmanager L (Aktualisierungseinrichtung) speichern die Moduldaten in der Moduldatensammlung T ab. So wird z.B. für das Zusatzmodul A in der Lizenz-Spalte die Art und Dauer der Lizenz vermerkt und wird die Internetadresse x mit einer Internetadresse y, die beispielsweise direkt auf die Internetseite bzw. Lizenzierungsstelle 6' zum Erwerb einer zeitlich begrenzten Lizenz verweist, ersetzt. Die Moduldatensammlung T, die somit aktualisiert ist, ist in Fig. 4 dargestellt.

Ist die Nutzungsberechtigung für das Zusatzmodul A abgelaufen und wird danach das Zusatzmodul A aufgerufen, läuft der bezüglich des ersten Lizenzerwerbs beschriebene Vorgang wieder ab, wobei aber jetzt als Internetadresse y ausgelesen und bereitgestellt wird, so daß bei der automatischen Herstellung der Verbindung gleich die Lizenzierungsstelle 6' bzw. Internetseite für den Erwerb zeitlich begrenzter Nutzungsberechtigungen aufgerufen wird. Dadurch wird in Abhängigkeit der Lizenzart (der inzwischen abgelaufen) Lizenz des Zusatzmoduls A eine Adresse einer entsprechenden Lizenzierungsstelle bestimmt, wodurch der Lizenzerwerb für den Anwender vereinfacht ist. Nach Erwerb der Laufberechtigung erfolgt wieder die beschriebene Aktualisierung der Moduldatensammlung T.

Wenn nun der Anwender auch eine Nutzungsberechtigung für das Zusatzmodul C erwerben will, kann er den Lizenzerwerb durch Aufruf des Moduls, wie oben hinsichtlich Modul A beschrieben wurde, beginnen. Es ist aber auch möglich, mittels einer im Hauptmodul H implementierten Prozedur den Lizenzerwerb für das Modul C auswählen.

In diesem Fall greift das Hauptmodul H (bzw. Zusatzmodul C) und/oder der Lizenzmanager L auf die Moduldatensammlung T zu und wertet die dem Zusatzmodul C zugeordnete Daten aus. So wird die Internetadresse x ausgelesen und durch den Eintrag "B" in der Spalte Verknüpfung wird festgestellt, daß zur Ausführung des Zusatzmoduls C das Zusatzmodul B benötigt wird.

Es wird automatisch eine Verbindung zur Internetadresse x hergestellt und an diese Adresse wird die Information übermittelt, daß das Zusatzmodul C nur mit dem Zusatzmodul B ausführbar ist. Damit kann die Lizenzierungsstelle 6 ein entsprechend angepaßtes Angebot für den Anwender erstellen.

Es wird angenommen, daß dem Anwender eine kostenlose Nutzung der Zusatzmodule B und C für die Zeitdauer von einem Monat angeboten wird, das dieser annimmt. Diese Nutzungsberechtigung wird über die Internetverbindung 5 zum Computer 1 übertragen und in die Spalte Lizenz eingetragen, und die Internetadresse x für die Module B und C wird durch die Internetadresse z ersetzt, an der spezielle Angebote zum Erwerb einer Nachfolgenutzungsberechtigung für Module B und C vorhanden sind. Die derart geänderte Moduldatensammlung T ist in Fig. 5 gezeigt.

Durch das beschriebene Verfahren werden in Abhängigkeit der gerade vorhandenen Nutzungsberechtigungslage, die in der Moduldatensammlung T abgespeichert ist und ständig auf dem laufenden gehalten wird, Informationen zur Nutzungsberechtigungserwerb bereitgestellt, wie z.B. eine Adresse einer Lizenzierungsstelle. Es ist somit möglich, in einfachster Art und Weise kundenspezifische Angebote für den Erwerb einer Nutzungsberechtigung für ein Zusatzmodul zu erstellen.

Natürlich ist es auch möglich, daß die Zusatzmodule A-D noch nicht auf dem Computer-System 1 installiert sind, sondern erst beim (erstmaligen) Erwerb einer entsprechenden Nutzungsberechtigung zum Computer-System 1 übertragen und dort installiert werden. Dabei kann man gleich die schon bestehende Internetverbindung 5 zwischen dem Computer-System 1 und der Lizenzierungsstelle 6 nutzen.

Das erfindungsgemäße Verfahren läßt sich auch besonders einfach in schon bestehende Anwendungen integrieren, bei denen bei Aufruf eines Zusatzmoduls eine Überprüfung des Vorliegens der Laufberechtigung schon implementiert ist. Diese Überprüfung kann man ausnützen, um im Fall des Nichtvorliegens der entsprechenden Laufberechtigung die oben beschriebenen Schritte auszuführen.

Da beispielsweise bei Programmen für das Windows-Betriebssystem für die Überprüfung eine entsprechende Überprüfungsdatei (beispielsweise .dll-Datei; dynamic-link-library-Datei) aufgerufen wird, ist keine programmtechnische Änderung des Lizenzüberprüfungsablaufes des Programms notwendig. Es muß lediglich die Überprüfungsdatei gegen eine andere Überprüfungsdatei ausgetauscht werden, mit der das erfindungsgemäße Verfahren dann durchführbar ist.

Der Lizenzmanager L, der als Teil des Programms 7 beschrieben wurde, kann auch ein separates Programm sein, das zur Lizenzüberprüfung für das Programm 7 und gegebenenfalls für weitere Programme eingesetzt wird.

## Patentansprüche

1. Verfahren zum Betreiben eines Computer-Systems (1), mit den Schritten:
Installieren eines lauffähigen Hauptmoduls (H) eines noch zumindest ein Zusatzmodul (A,B,C,D) aufweisenden Programms (7) auf dem Computer-System (1),
Abspeichern von Moduldaten für das Hauptmodul (H) und/oder für ein das zumindest eine Zusatzmodul (A, B, C, D) des Programms (7) im Computer-System, wobei die abgespeicherten Moduldaten einen Lizenzteil, der zu Feststellung des Vorliegens einer Nutzungsberechtigung des Haupt -und/oder des Zusatzmoduls H; A-D), für das bzw für die die Moduldaten abgespeichert sind, verwendet wird, und bevorzugt noch einen Informationsteil enthalten,
Auswerten der abgespeicherten Moduldaten für einen Erwerb einer weiteren Nutzungsberechtigung für das zumindest eine Zusatzmodul (A-D) oder für ein weiteres Zusatzmodul (A-D), und Bereitstellen von Informationen für den Nutzungsberechtigungserwerb in Abhängigkeit des Auswerteergebnisses.

2. Verfahren nach Anspruch 1, bei dem Informationen bereitgestellt werden, die eine Adresse einer Lizenzierungsstelle (6) enthalten, bei der die weitere Nutzungsberechtigung für das zumindest Zusatzmodul (A-D) erworben werden kann.

3. Verfahren nach einem der obigen Ansprüche, bei dem die Moduldaten im Auswerte-Schritt hinsichtlich der Nutzungsberechtigung, insbesondere der Art der Nutzungsberechtigung, des zumindest einen Zusatzmoduls (A-D) und/oder des Hauptmoduls (H) ausgewertet werden.

4. Verfahren nach einem der obigen Ansprüche, bei dem im Bereitstellungsschritt Informationen bereitgestellt werden, die Angaben über die vorhandene Nutzungsberechtigungslage des zumindest einen Zusatzmoduls (A-D) und/oder des Hauptmoduls (H) enthalten.

5. Verfahren nach einem der obigen Ansprüche, bei dem die Moduldaten mittelbar oder unmittelbar durch das Hauptmodul (H) oder durch ein Lizenzmodul (L) verwaltet werden.

6. Verfahren nach einem der obigen Ansprüche, bei dem bei Aufruf eines Zusatzmoduls (A-D) anhand der abgespeicherten Moduldaten überprüft wird, ob eine Nutzungsberechtigung für das aufgerufene Zusatzmodul (A-D) vorliegt, wobei bei Vorliegen der Nutzungsberechtigung das aufgerufene Zusatzmodul (A-D) ausgeführt wird und bei Nichtvorliegen der Nutzungsberechtigung der Auswerte-Schritt und der Bereitstellungs-Schritt durchgeführt werden.

7. Verfahren nach einem der obigen Ansprüche, bei dem nach dem Erwerb der weiteren Nutzungsberechtigung Moduldaten, die den Erwerb der weiteren Nutzungsberechtigung betreffen, im Computer-System (1) abgespeichert werden.

8. Verfahren nach einem der obigen Ansprüche, bei dem anhand der bereitgestellten Informationen automatisch eine Verbindung zu einer Lizenzierungsstelle (6) hergestellt wird, bei der die Nutzungsberechtigung erworben werden kann.

9. Verfahren nach Anspruch 8, bei dem die Lizenzierungsstelle Moduldaten erzeugt, die zum Computer-System (1) übertragen werden.

10. Verfahren nach Anspruch 8 oder 9, bei dem Komponenten oder Ergänzungen des Zusatzmoduls oder das Zusatzmodul, für die die weitere Nutzungsberechtigung erworben wird, zum Computer-System (1) übertragen werden.

11. Verfahren nach einem der obigen Ansprüche, bei dem das Bereitstellen von Information ein Erzeugen und Ausgeben eines Menüs mit auswählbaren Menüpunkten umfaßt, wobei die Menüpunkte in Abhängigkeit des Auswerteergebnisses, insbesondere der Nutzungsberechtigungslage, bestimmt werden.

12. Verfahren nach einem der obigen Ansprüche, bei dem zum Erwerb einer weiteren Nutzungsberechtigung für das Hauptmodul (H) die abgelegten Moduldaten ausgewertet und in Abhängigkeit des Auswerteergebnisses Informationen zum Nutzungsberechtigungserwerb bereitgestellt werden, wobei bevorzugt ferner nach dem Nutzungsberechtigungserwerb Moduldaten über den Nutzungsberechtigungserwerb für das Hauptmodul (H) im Computer-System (1) abgespeichert werden.

13. Computer-System (1), auf dem ein lauffähiges Hauptmodul (H) eines noch zumindest ein Zusatzmodul (A,B,C,D) aufweisenden Programms (7) installiert ist, wobei das Computer-System (1) eine Aktualisierungseinrichtung aufweist, die im Computer-System (1), in dem bevorzugt Moduldaten für das Hauptmodul (H) abgespeichert sind, nach einem Erwerb einer Nutzungsberechtigung für das zumindest eine Zusatzmodul (A, B, C, D) des Programms (7) Moduldaten ablegt, die einen Lizenzteil, der zur Feststellung des Vorliegens der Nutzungsberechtigung des zumindest einen Zusatzmoduls (A-D) benötigt wird, und bevorzugt noch einen Informationsteil enthalten, wobei das Computer-System (1) weiter eine Auswerteeinheit, die für einen Erwerb einer weiteren Nutzungsberechtigung für das zumindest eine Zusatzmodul oder für ein weiteres Zusatzmodul des Programms (7) die abgespeicherten Moduldaten auswertet, und eine Bereitstellungseinheit umfaßt, die in Abhängigkeit des Auswerteergebnisses Informationen für den Nutzungsberechtigungserwerb bereitstellt.

## Claims

1. A method of operating a computer system (1), said method comprising the steps of:
installing an executable main module (H) of a program (7) further comprising at least one additional module (A, B, C, D) on the computer system (1),
storing module data for the main module (H) and/or for the at least one additional module (A, B, C, D) of the program (7) in the computer system, said stored module data comprising a license part, which is used to determine the presence of an authorization to use the main module and/or the additional module (H; A-D) for which the module data are stored, and preferably also comprising an information part,
evaluating the stored module data for acquisition of a further use authorization for the at least one additional module (A-D) or for a further additional module (A-D), and
providing information for acquisition of a use authorization as a function of the result of evaluation.

2. The method as claimed in Claim 1, wherein information is provided which contains an address of a licensing site (6) where the further use authorization for the at least one additional module (A-D) may be acquired.

3. The method as claimed in any one of the above Claims, wherein said module data are evaluated in the evaluating step with regard to the use authorization, in particular the type of use authorization, of the at least one additional module (A-D) and of the main module (H).

4. The method as claimed in any one of the above Claims, wherein information is provided in the providing step, said information containing details of the present use authorization situation of the at least one additional module (A-D) and/or of the main module (H).

5. The method as claimed in any one of the above Claims, wherein the module data are managed, directly or indirectly, by the main module (H) or by a license module (L).

6. The method as claimed in any one of the above Claims, wherein it is verified on the basis of the stored module data, upon call-up of an additional module (A-D), whether there is a use authorization for the called up additional module (A-D), and if there is such use authorization, the called up additional module (A-D) is executed, while, if there is no such use authorization, the evaluating step and the providing step are carried out.

7. The method as claimed in any one of the above Claims, wherein module data relating to the acquisition of the further use authorization are stored in the computer system (1) after acquisition of the further use authorization.

8. The method as claimed in any one of the above Claims, wherein a connection is automatically established, on the basis of the provided information, with a licensing site (6), where the use authorization may be acquired.

9. The method as claimed in Claim 8, wherein the licensing site generates module data, which are transmitted to the computer system (1).

10. The method as claimed in Claim 8 or 9, wherein components of or supplements to the additional module, or the additional module, for which said further use authorization is acquired, are transmitted to the computer system (1).

11. The method as claimed in any one of the above Claims, wherein providing information comprises generating and outputting a menu having selectable menu items, said menu items being determined as a function of the result of evaluation, in particular of the use authorization situation.

12. The method as claimed in any one of the above Claims, wherein, in order to acquire a further use authorization for the main module (H), the stored module data are evaluated, and information for acquisition of a use authorization is provided as a function of the result of evaluation, wherein, preferably further, module data concerning the acquisition of an authorization to use the main module (H) are stored in the computer system (1) after acquisition of such use authorization.

13. A computer system (1), on which an executable main module (H) of a program (7) further comprising at least one additional module (A, B, C, D) is installed, said computer system (1) comprising an updating means which stores module data comprising a license part required for determining the presence of the use authorization of the at least one additional module (A-D) and preferably also comprising an information part, after acquisition of a use authorization for the at least one additional module (A, B, C, D) of the program (7), in the computer system (1) in which module data for the main module (H) are preferably stored, said computer system (1) further comprising an evaluating unit which evaluates the stored module data for acquisition of a further use authorization for the at least one additional module or for a further additional module of the program (7), and comprising a providing unit which provides information for acquisition of a use authorization as a function of the result of said evaluation.

## Revendications

1. Procédé d'exploitation d'un système informatique (1), comportant les étapes suivantes:
installation d'un module principal opérationnel (H) d'un programme (7), présentant encore au moins un module supplémentaire (A, B, C, D) sur le système informatique (1),
mémorisation de données de modules pour le module principal (H) et/ou pour ledit au moins un module supplémentaire (A, B, C, D) du programme (7) dans le système informatique, les données de modules mémorisées contenant une partie licence, étant utilisée pour la constatation de la présence d'un droit d'utilisation du module principal et/ou du module supplémentaire (H ; A à D) pour lequel ou pour lesquels les données de modules sont mémorisées et de préférence également une partie informative,
évaluation des données de modules mémorisées pour l'acquisition d'un autre droit d'utilisation pour ledit au moins un module supplémentaire (A à D) ou pour un autre module supplémentaire (A à D) et
mise à disposition d'informations pour l'acquisition du droit d'utilisation, en fonction du résultat de l'évaluation.

2. Procédé selon la revendication 1, dans lequel des informations contenant l'adresse d'un service de délivrance de licences (6), auprès duquel il est possible d'acquérir un autre droit d'utilisation pour ledit au moins un module supplémentaire (A à D), sont mises à disposition.

3. Procédé selon l'une quelconque des revendications précédentes, dans lequel au cours de l'étape d'évaluation, les données de modules sont évaluées au niveau du droit d'utilisation, en particulier au niveau du type du droit d'utilisation dudit au moins un module supplémentaire (A à D) et/ ou du module principal (H).

4. Procédé selon l'une quelconque des revendications précédentes, dans lequel, au cours de l'étape de mise à disposition, des informations contenant des indications concernant la situation actuelle du droit d'utilisation dudit au moins un module supplémentaire (A à D) et/ou du module principal (H) sont mises à disposition.

5. Procédé selon l'une quelconque des revendications précédentes, dans lequel les données de modules sont gérées directement ou indirectement par le module principal (H) ou par un module de licence (L).

6. Procédé selon l'une quelconque des revendications précédentes, dans lequel, lors de l'interrogation de l'un des modules supplémentaires (A à D), il est contrôlé, à l'aide des données de modules mémorisées, si un droit d'utilisation pour le module supplémentaire (A à D) interrogé est donné, en cas de présence du droit d'utilisation, le module supplémentaire (A à D) interrogé étant exécuté et en cas d'absence du droit d'utilisation, l'étape d'évaluation et l'étape de mise à disposition étant réalisées.

7. Procédé selon l'une quelconque des revendications précédentes, dans lequel, après acquisition des droits d'utilisation supplémentaires, des données de modules, concernant l'acquisition des droits d'utilisation supplémentaires sont mémorisées dans le système informatique (1).

8. Procédé selon l'une quelconque des revendications précédentes, dans lequel, à l'aide des informations mises à disposition, une liaison automatique vers un service délivrant des licences (6) et auprès duquel il est possible d'acquérir le droit d'utilisation est établie.

9. Procédé selon la revendication 8, dans lequel le service délivrant des licences génère des données de modules, qui sont transférées vers le système informatique (1).

10. Procédé selon la revendication 8 ou 9, dans lequel des composantes ou des compléments du module supplémentaire ou le module supplémentaire pour lesquels les droits d'utilisation supplémentaires sont acquis, sont transférés vers le système informatique (1).

11. Procédé selon l'une quelconque des revendications précédentes, dans lequel la mise à disposition d'informations comprend la génération et l'édition d'un menu comprenant des sous-menus sélectionnables, les sous-menus étant déterminés en fonction du résultat de l'évaluation, en particulier en fonction de la situation du droit d'utilisation.

12. Procédé selon l'une quelconque des revendications précédentes, dans lequel, pour l'acquisition d'un droit d'utilisation supplémentaire pour le module principal (H), les données de modules sauvegardées sont évaluées et en fonction du résultat de l'évaluation, des informations concernant l'acquisition de droits d'utilisation sont mises à disposition, et à l'issue de l'acquisition des droits d'utilisation, des données de modules concernant l'acquisition des droits d'utilisation du module principal (H) sont mémorisées de préférence en outre dans le système informatique (1).

13. Système informatique (1) sur lequel est installé un module principal opérationnel (H) d'un programme (7) présentant encore au moins un module supplémentaire (A, B, C, D), le système informatique (1) présentant un dispositif de mise à jour, qui au sein du système informatique (1) dans lequel sont mémorisées de préférence des données de modules concernant le module principal (H), après l'acquisition d'un droit d'utilisation pour l'au moins un module supplémentaire du programme 7 (A, B, C, D), sauvegarde des données de modules, contenant une partie licence, nécessitée pour la constatation de la présence du droit d'utilisation dudit au moins un module supplémentaire (A à D) et de préférence également une partie informative, le système informatique (1) comprenant par ailleurs une unité d'évaluation, qui évalue les données de modules mémorisées pour l'acquisition d'un droit d'utilisation supplémentaire pour l'au moins un module supplémentaire ou pour un autre module supplémentaire pour le programme (7) et qui contient une unité de mise à disposition, qui en fonction du résultat de l'évaluation met à disposition des informations pour l'acquisition du droit d'utilisation.
